# EUROPÄISCHE PATENTSCHRIFT

(11) **EP 0 697 081 B1**
(45) Veröffentlichungstag und Bekanntmachung des Hinweises auf die Patenterteilung: **22.07.1998**
(21) Anmeldenummer: 95906974.1
(22) Anmeldetag: 19.01.1995
(51) Int. Cl.: F16K 3/316

(54) **ROLLENGELAGERTER SCHIEBER, INSBESONDERE DOPPELPLATTENSCHIEBER**
SLIDE VALVE MOUNTED ON ROLLERS, IN PARTICULAR A GOGGLE VALVE
ROBINET-VANNE MONTE SUR ROULEAUX, NOTAMMENT ROBINET-VANNE A DOUBLE OPERCULE

(30) Priorität: 23.02.1994 DE 4405836
(43) Veröffentlichungstag der Anmeldung: 21.02.1996
(73) Patentinhaber: Zimmermann & Jansen GmbH, D-52355 Düren (DE)
(72) Erfinder: IRNICH, Franz-Josef, D-52393 Hürtgenwald-Gey (DE)
(74) Vertreter: Popp, Eugen, Dr.
(86) Internationale Anmeldenummer: EP9500185
(87) Internationale Veröffentlichungsnummer: WO9523306

(56) Entgegenhaltungen:
- DE-A- 2 342 448
- DE-A- 3 609 635
- DE-U- 8 706 251
- US-A- 4 235 256
- US-A- 4 582 296

## Beschreibung

Die Erfindung betrifft einen Schieber zum Absperren großer Fluidleitungen, insbesondere Doppelplattenschieber, gemäß dem Oberbegriff des Anspruches 1.

Derartige Schieber, insbesondere Doppelplatten- oder Brillenschieber, sind allgemein bekannt, und zwar insbesondere durch die Anmelderin. Es wird diesbezüglich auf das Prospektblatt Nr. 103, I/85 - Brillenschieber II, der Zimmermann & Jansen GmbH, und auf die DE-C-40 11 274 verwiesen. Die bekannten Doppelplattenschieber kommen dann zur Anwendung, wenn in der Offenstellung des Schiebers eine Abdichtung seines Durchflußraumes gegenüber der Umgebung und insbesondere gegenüber dem Innenraum des Schiebergehäuses verlangt wird. Dies ist insbesondere dann der Fall, wenn es sich um einen Gasstrom mit Verunreinigungen aus sublimierenden Stoffen handelt, weil sich diese sonst in nicht abgeschlossenen Gehäuseteilen anlagern und zu einer Totalverstopfung und somit einer Verhinderung der Schieberbetätigung führen können. Derartige Schieber werden auch aus ähnlichen Gründen bei staubhaltigen Gasen, aber auch stark verschmutzten flüssigen Medien eingesetzt, z. B. in Kohlevergasungsanlagen, Verbrennungsanlagen, chemischen Anlagen, Pipelines oder dergleichen.

Da es sich bei Doppelplattenschiebern um schwergewichtige Anlagen handelt, ist es wichtig, daß die Schieberplatte leichtgängig geführt ist. Des weiteren soll die Schieberplatten-Führung so ausgebildet sein, daß sie in jeder beliebigen Einbaulage, d. h. vertikal stehend, vertikal hängend, horizontal liegend, voll funktionsfähig ist, ohne daß gesonderte konstruktive Änderungen vorgenommen werden müssen.

Der vorliegenden Erfindung liegt daher die Aufgabe zugrunde, einen Schieber, insbesondere Doppelplattenschieber zu schaffen, dessen Schieberplatte leichtgängig geführt ist, wobei die Funktion der Schieberplatten-Führung in jeder beliebigen Einbaulage sichergestellt ist.

Die vorgenannte Aufgabe wird durch die kennzeichnenden Merkmale des Anspruches 1 gelöst. Dementsprechend ist die Schieberplatte innerhalb des Schiebergehäuses rollengelagert, und zwar derart, daß die Lagerrollen die Schieberplatte radial zu ihrer Bewegungsrichtung nach allen Seiten hin halten. Die Rollenlagerung der Schieberplatte gewährleistet deren Leichtgängigkeit. Die Anordnung der Lagerrollen erlaubt jede beliebige Einbaulage des Schiebers bzw. der Schieberplatte, nämlich entweder aufrecht stehend, vertikal hängend oder horizontal oder schräg liegend. Die Funktionssicherheit ist durch die erfindungsgemäße Anordnung der Lagerrollen in jeder Einbaulage gewährleistet.

Bevorzugte konstruktive Details des erfindungsgemäßen Konstruktionsprinzips sind in den Unteransprüchen beschrieben.

Hervorzuheben sei in diesem Zusammenhang Anspruch 3, wonach die Schieberplatte an einer Schmalseite durch ein Führungsprofil, insbesondere ein Vieleck-, Rundstab- oder Rohrprofil begrenzt ist, an dem im Schiebergehäuse drehbar angeordnete Lagerrollen abrollbar sind, wobei die Lagerrollen in bezug auf die Profil längsachse etwa sternförmig angeordnet sind. Damit ist sichergestellt, daß die Schieberplatte radial zu ihrer Bewegungsrichtung nach allen Seiten hin gehalten ist. An der gegenüberliegenden Schmalseite der Schieberplatte genügt die Anordnung von flachseitig abrollenden Lagerrollen entsprechend den Ansprüchen 6 bzw. 7.

Die Lagerrollen sind vorzugsweise jeweils individuell der zugeordneten Längsführungsfläche an der Schieberplatte zustellbar, um eine spielfreie Längsführung der Schieberplatte zu gewährleisten. Vor allem lassen sich damit auch Fertigungstoleranzen ausgleichen.

Auch sei auf die Konstruktion gemäß Anspruch 12 verwiesen. Dementsprechend soll bei dieser Ausführungsform die Schieberplatte durch einen Zahnstangen- oder Kettenradantrieb hin- und herbewegbar sein, wobei bei einem Kettenradantrieb dieser eine an einer Seite, vorzugsweise Schmalseite der Schieberplatte befestigte Kette sowie ein in diese eingreifendes, mit einem Antrieb wirkverbundenes Kettenrad aufweist. Vorzugsweise dient als Antrieb ein Elektro- oder Hydraulikmotor. Das Kettenrad ist in einem am Schiebergehäuse gasdicht anflanschbaren Gehäuse gelagert, wobei die mit dem Kettenrad getrieblich verbundene Antriebswelle gasdicht aus dem Kettenradgehäuse herausgeführt ist. Damit kann der Kettenradantrieb an- und abgeflanscht werden, ohne daß die Gasdichtigkeit des Schieber- und Kettenradgehäuses verlorengeht.

Konstruktive Details dieser Ausführungsform sind in den Ansprüchen 13 und 14 beschrieben.

In Anspruch 15 ist eine weitere bevorzugte Ausführungsform dargestellt. Bei dieser Ausführungsform eines Schiebers, insbesondere Doppelplattenschiebers, weist dessen Rohrbrücke zwei durch einen Kompensator miteinander verbundene Dichtringe auf, die in der Offenstellung des Schiebers gegen korrespondierende Dichtsitze des Schiebergehäuses mittels einer Spreizvorrichtung (elastische Vorspannung) preßbar sind. Die Absperrplatte des Schiebers umfaßt zwei Absperrscheiben, die in der Schließstellung des Schiebers ebenfalls mittels einer Spreizeinrichtung gegen die erwähnten Dichtsitze des Schiebergehäuses preßbar sind. Als Spreizeinrichtung können federelastische Elemente ebenso wie für die erwähnten Dichtringe der Rohrbrücke verwendet werden. Es ist jedoch auch denkbar, die Absperrscheiben mittels der an sich bekannten Keil-im-Keil-Konstruktion zu spreizen. Statt der beschriebenen Ausführungsform kann der Doppelplattenschieber auch ohne Kompensator und ohne Spreizeinrichtung für die Absperrplatte ausgebildet sein. Dann muß ein Gehäusedichtsitz beweglich ausgebildet sein, insbesondere mit Hilfe eines ringförmigen Kompensators.

Das Besondere der vorgenannten und an sich bereits bekannten Doppelplattenschieber-Konstruktion ist, daß die Dichtringe der Rohrbrücke und/oder die Absperrscheiben der Absperrplatte durch radial sowie axial gerichtete Einstellschrauben innerhalb eines Rahmens der Schieberplatte gehalten sind. Vorzugsweise liegen die radial gerichteten Einstellschrauben mit ihrem Schraubenkopf am Rahmen der Schieberplatte gleitlagernd an. Damit ist eine axiale Gleitlagerung für die Spreizbewegung der Rohrbrücken-Dichtringe bzw. der Absperrscheiben erhalten, wobei es sich diesbezüglich um eine besonders einfache und am Einbauort justierbare Konstruktion handelt. Die axial gerichteten Einstellschrauben befinden sich vorteilhafterweise zwischen den Dichtringen und/oder Absperrscheiben. Sie bilden einen Anschlag für die maximale axiale Annäherung der Dichtringe bzw. Absperrscheiben. Des weiteren dienen sie im axial eingezogenen Zustand der Dichtringe oder Absperrscheiben einer axialen Zentrierung derselben.

Nachstehend wird ein Ausführungsbeispiel eines erfindungsgemäß ausgebildeten Doppelplatten- bzw. Brillenschiebers anhand der beigefügten Zeichnung näher erläutert. Es zeigen:
- Fig. 1: einen Doppelplattenschieber gemäß Erfindung in Frontansicht;
- Fig. 2: den Doppelplattenschieber gemäß Fig. 1 im Schnitt im Bereich eines oberen und unteren Rollenlagers und im vergrößerten Querschnitt;
- Fig. 3: einen Schnitt durch den Doppelplattenschieber gemäß Fig. 1 im Bereich eines Kettenradantriebes in vergrößertem Maßstab.

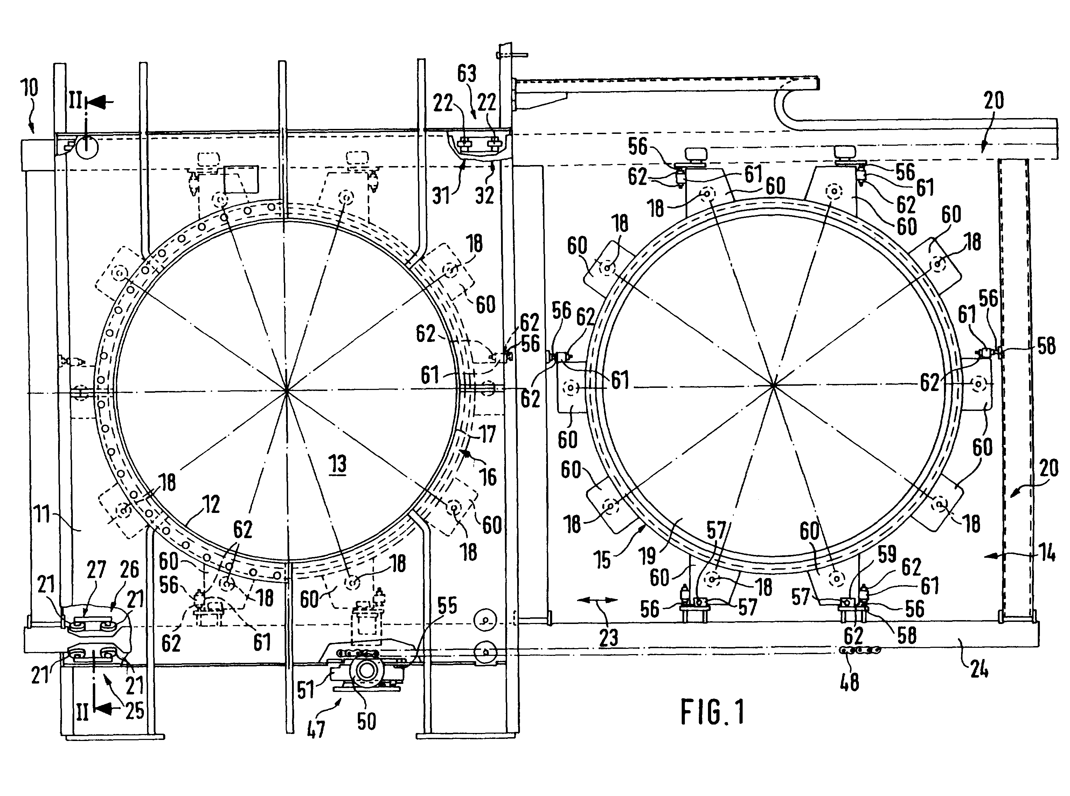

Der in den Fig. 1 bis 3 dargestellte Doppelplattenschieber 10 weist ein flach quaderförmiges Schiebergehäuse 11 mit einem zentralen Durchgang 13 und zwei an den Flachseiten angeflanschte und den zentralen Durchgang 13 jeweils begrenzende Rohrstutzen 12 auf, an deren Innenseite jeweils ein nicht näher dargestellter Gehäusedichtsitz angeordnet bzw. ausgebildet ist. Zwischen diesen Gehäusedichtsitzen ist eine Schieberplatte 14 hin- und herverschiebbar gelagert, und zwar innerhalb des Schiebergehäuses 11 quer zur nicht dargestellten Fluidleitung bzw. quer zur Längsachse des Durchgangs 13. Die Schieberplatte 14 ist brillenartig ausgebildet. Sie umfaßt eine Absperrplatte 15 sowie eine Rohrbrücke 16, wobei in Schließstellung die Absperrplatte 15 und in Offenstellung die Rohrbrücke 16 in die Fluidleitung bzw. in den Durchgang 13 hineinbewegt ist. Letztgenannte Stellung ist in Fig. 1 dargestellt. Die Rohrbrücke 16 weist zwei durch einen Kompensator, z. B. in Form eines Wellrohrs oder dergleichen miteinander verbundene Dichtringe 17 auf, die in der Offenstellung des Schiebers entsprechend Fig. 1 gegen korrespondierende Dichtsitze des Schiebergehäuses 11 preßbar sind, und zwar durch gleichmäßig über den Umfang verteilt angeordnete Spreizelemente, insbesondere Federspreizelemente 18, die bei Bedarf mechanisch, pneumatisch oder insbesondere hydraulisch zusammengepreßt werden können, so daß die Dichtringe von den Dichtsitzen des Schiebergehäuses abheben. Bei den vorgenannten Spreizelementen 18 handelt es sich um an sich bekannte Bauteile.

Die Absperrplatte 15 besteht aus zwei axial voneinander beabstandeten Absperrscheiben 19, die in Schließstellung des Schiebers ebenfalls mittels vorgenannter Spreizelemente 18 gegen die erwähnten Dichtsitze des Schiebergehäuses 11 preßbar sind.

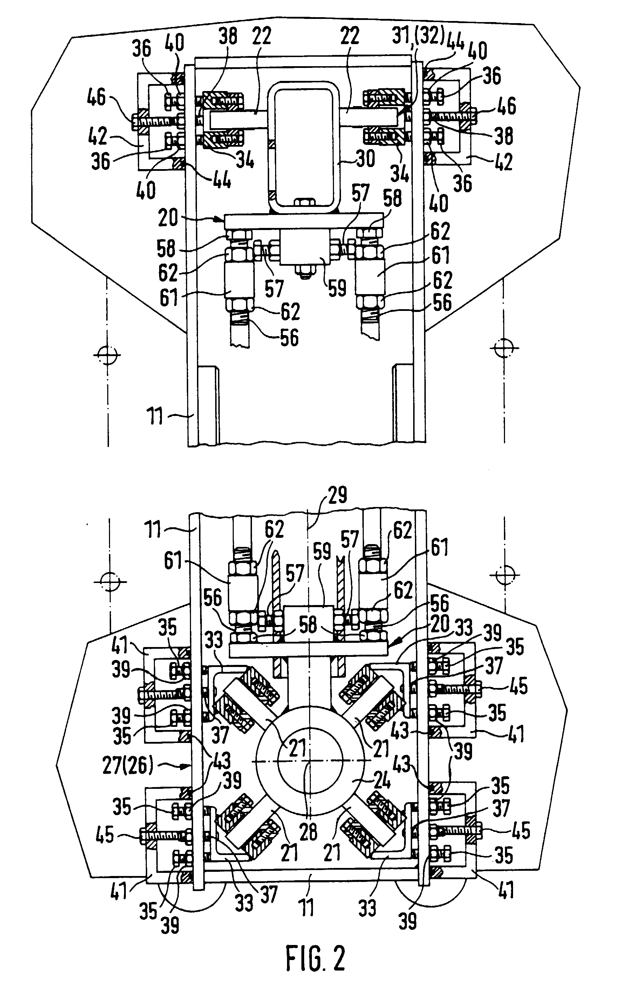

Die Dichtringe 17 und Absperrscheiben 19 sind innerhalb eines Rechteckrahmens 20 gelagert. Dieser Rechteckrahmen 20 bzw. die Schieberplatte 14 ist innerhalb des Schiebergehäuses 11 rollengelagert, und zwar derart, daß die Lagerrollen 21, 22 die Schieberplatte 14 bzw. deren Rahmen radial zu ihrer Bewegungsrichtung entsprechend dem Doppelpfeil 23 in Fig. 1 nach allen Seiten hin halten. Konkret ist die Schieberplatte 14 bzw. deren Rahmen 20 parallel zur Bewegungsrichtung 23 an zwei gegenüberliegenden Schmalseiten, nämlich in Fig. 1 der unteren und oberen Schmalseite rollengelagert. An der Unterseite ist die Schieberplatte 14 bzw. der Rahmen 20 durch ein Rohrprofil 24 begrenzt. An diesem Rohrprofil 24 sind im Schiebergehäuse 11 drehbar angeordnete Lagerrollen 21 abrollbar, wobei die Lagerrollen in bezug auf die Profillängsachse 28 entsprechend Fig. 2 sternförmig angeordnet sind. Das Rohrprofil 24 stellt beim dargestellten Ausführungsbeispiel zugleich die untere Seite des Rechteckrahmens 20 dar. Des weiteren sind dem Rohrprofil 24 zwei in Bewegungsrichtung 23 der Schieberplatte 14 voneinander beabstandete Rollenlagereinheiten 25 zugeordnet, von denen in Fig. 1 nur eine sichtbar dargestellt ist. Die Rollenlagereinheiten 25 weisen jeweils zwei Sätze 26, 27 von sternförmig angeordneten Lagerrollen 21 auf. Jeder Lagerrollensatz 26 bzw. 27 umfaßt entsprechend Fig. 2 vier gleichmäßig über den Umfang des Rohrprofils 24 angeordnete Lagerrollen 21, so daß sie in zwei sich senkrecht zueinander erstreckenden Ebenen liegen, wobei diese Ebenen mit der Schieberplattenebene 29 jeweils einen Winkel von etwa 45° einschließen.

Das Rohrprofil 24 kann alternativ zu der beschriebenen Ausführungsform an der oberen Schmalseite oder auch an einer Flachseite der Schieberplatte befestigt sein.

An der oberen Schmalseite ist die Schieberplatte durch flachseitig abrollende Lagerrollen 22 gehalten. Konkret sind den flachseitig abrollenden Lagerrollen 22 ein Führungssteg in Form eines Rechteckhohlprofils 30 zugeordnet. Die Drehachsen der Lagerrollen 22 erstrecken sich parallel zur Schieberplattenebene 29. Ebenso wie dem unteren Rohrprofil 24 sind auch dem oberen Rechteck-Hohlprofil 30 zwei Lagerrolleneinheiten mit jeweils zwei Lagerrollenpaaren 31, 32 zugeordnet, wobei die Lagerrolleneinheiten in Bewegungsrichtung 23 ebenfalls voneinander beabstandet sind, nämlich sich jeweils im Eckbereich des Schiebergehäuses 11 befinden. Auch die dem Rohrprofil 24 zugeordneten Rollenlagereinheiten 25 befinden sich jeweils im gegenüberliegenden Eckbereich des Schiebergehäuses 11.

Wie die Fig. 2 sehr gut erkennen läßt, sind die Lagerrollen 21 ebenso wie die Lagerrollen 22 jeweils individuell den zugeordneten Längsführungsflächen des Rohrprofils 24 sowie Rechteck-Hohlprofils 30 zustellbar, so daß Fertigungstoleranzen ausgeglichen werden können. Die Lagerrollen 21 sind ebenso wie die Lagerrollen 22 in Lagerböcken 33 bzw. 34 drehgelagert gehalten. Die Lagerböcke 33, 34 sind bei dem dargestellten Ausführungsbeispiel über vier an den Ecken eines gedachten Quadrats angeordnete Einstellschrauben 35 bzw. 36 an der zugeordneten Wand des Schiebergehäuses 11 abgestützt. Die Konterung der mittels der Einstellschraube 35 bzw. 36 eingestellten Relativlage erfolgt mittels einer zwischen den Einstellschrauben, insbesondere jeweils zentral dazwischen angeordneten Konterschraube 37 bzw. 38. Die Einstellschrauben 35 bzw. 36 sind durch die Schiebergehäusewand hindurchgeschraubt, bis das distale Ende jeweils in Anlage an den zugeordneten Lagerbock 33 bzw. 34 kommt. Die Einschraubtiefe der Einstellschrauben 35, 36 läßt sich in herkömmlicher Weise durch Kontermuttern 39 bzw. 40 festhalten.

Die Einstell- und Konterschrauben sind jeweils schiebergehäuse-außenseitig durch eine lösbar befestigte Haube 41 bzw. 42 fluiddicht abgedeckt, sofern es sich um ein fluiddicht ausgebildetes Schiebergehäuse 11 handelt. Die fluiddichte Abdeckung wird durch am Auflage-Rand der Abdeckhauben eingearbeitete Ringdichtungen 43 bzw. 44, z. B. in Form von O-Ringen, gewährleistet. Die Befestigung der Abdeckhauben 41 bzw. 42 erfolgt jeweils durch Befestigungsschrauben 45 bzw. 46, die durch die Abdeckhauben jeweils hindurchgeführt und in die Schiebergehäusewandung eingeschraubt sind.

Durch die beschriebene Konstruktion ist es möglich, die einzelnen Lagerrollen individuell einzustellen und zu fixieren. Es läßt sich eine zwängungsfreie Linearführung der Schieberplatte 14 erhalten, wobei die Anordnung der Lagerrollen derart ist, daß die Schieberplatte bzw. der Schieber insgesamt in beliebiger Raumlage eingebaut werden kann. Die Schieberplatte 14 ist in jeder Einbaulage spiel- und zwängungsfrei geführt. Dementsprechend gering sind auch die erforderlichen Antriebskräfte zur Bewegung der Schieberplatte 14, und zwar auch dann, wenn der Bewegungszyklus sehr gering ist.

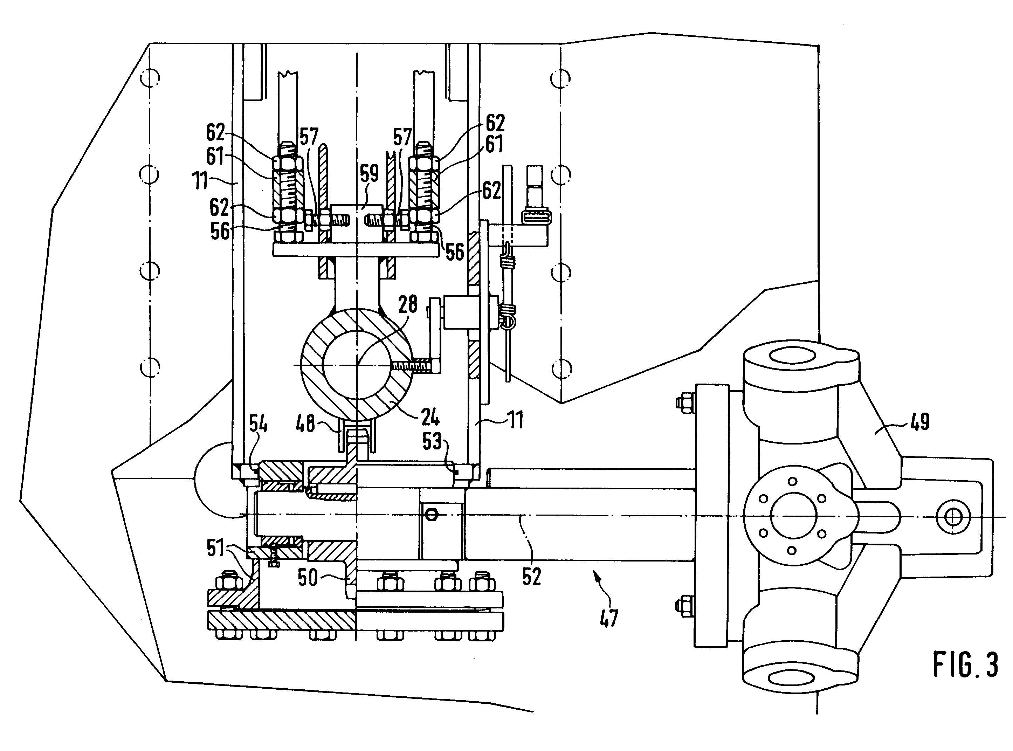

Als nächstes sei noch der Antrieb der Schieberplatte 14 anhand der Fig. 3 beschrieben.

Die Schieberplatte 14 ist bei dem dargestellten Ausführungsbeispiel durch einen Kettenradantrieb 47 in Richtung des Doppelpfeiles 23 hin- und herbewegbar. Der Kettenradantrieb 47 weist eine an der in Fig. 1 bzw. Fig. 3 unteren Schmalseite der Schieberplatte 14, und zwar konkret an der Unterseite des Rohrprofils 24 befestigte Kette 48 sowie ein in diese eingreifendes, mit einem Antrieb, insbesondere Hydraulikmotor 49 wirkverbundenes Kettenrad 50 auf. Das Kettenrad 50 ist in einem am Schiebergehäuse 11, nämlich an dessen unterer Schmalseite fluiddicht anflanschbaren Gehäuse 51 gelagert, wobei die mit dem Kettenrad 50 getrieblich verbundene Antriebswelle 52 fluiddicht aus dem Kettenradgehäuse 51 herausgeführt ist. Damit ist ein An- und Abflanschen des Hydraulikmotors 49 unter Aufrechterhaltung der Fluiddichtigkeit des Schiebergehäuses einschließlich Kettenradgehäuses möglich. Das Schiebergehäuse 11 weist an seiner unteren Schmalseite zum Anflanschen des Kettenradgehäuses 51 einen Durchgang 53 auf, in den unter Zwischenschaltung einer Ringdichtung 54, insbesondere in Form eines O-Rings, das Kettenradgehäuse 51 einpaßbar ist, um dann gegenüber dem Schiebergehäuse 11 mittels Einstell- und Befestigungsschrauben 55 (siehe Fig. 1) justiert und fixiert zu werden. Vorzugsweise sind vier Einstell- und Befestigungsschrauben vorgesehen derart, daß sie in Draufsicht auf das Kettenradgehäuse 51 die Ecken eines gedachten Rechtecks bilden.

Mittels der Einstell- und Befestigungsschrauben ist das Kettenradgehäuse 51 und damit auch das schiebergehäuseseitig aus dem Kettenradgehäuse 51 vorstehende Kettenrad 50 unter Aufrechterhaltung der Fluiddichtigkeit zwischen dem Inneren des Schiebergehäuses 11 und der Umgebung der an der Unterseite des Rohrprofils 24 befestigten Antriebskette 48 mehr oder weniger weit zustellbar, so daß ein praktisch spielfreier Eingriff zwischen Kettenrad 50 und Antriebskette 48 gewährleistet ist.

Wie bereits oben dargelegt worden ist, weist die Rohrbrücke 16 zwei durch einen nicht näher dargestellten Kompensator miteinander verbundene Dichtringe 17 auf, die in der Offenstellung des Schiebers gegen korrespondierende Dichtsitze des Schiebergehäuses 11 mittels der erwähnten Spreizelemente 18 anpreßbar sind. Die Absperrplatte 15 besteht ebenfalls aus zwei axial einander zustellbaren Absperrscheiben 19, die in der Schließstellung des Schiebers ebenfalls mittels der erwähnten Spreizelemente 18 gegen die erwähnten Dichtsitze des Schiebergehäuses 11 anpreßbar sind. Die Dichtringe 17 der Rohrbrücke 16 und die Absperrscheiben 19 der Absperrplatte 15 sind entsprechend den Fig. 1 bis 3 durch radial sowie axial gerichtete Einstellschrauben 56 bzw. 57 innerhalb des Rahmens 20 der Schieberplatte 14 gehalten. Die radial gerichteten Einstellschrauben 56 liegen mit ihrem Schraubenkopf 58 am Rahmen 20 der Schieberplatte 14 gleitlagernd an. Auf diese Weise ist innerhalb des Rahmens 20 der Schieberplatte 14 eine axiale Führung der Dichtringe 17 bzw. Absperrscheiben 19 sichergestellt; denn wie oben ausgeführt, sind die Dichtringe 17 der Rohrbrücke 16 und die Absperrscheiben 19 der Absperrplatte 15 durch die Spreizelemente 18 axial auseinander bzw. aufeinander zu bewegbar. Die entsprechende Führung wird durch die erwähnten Einstellschrauben 56 mit am Rahmen 20 anliegenden Schraubenköpfen 58 erhalten.

Die axial gerichteten Einstellschrauben 57 sind jeweils zwischen den beiden Dichtringen 17 der Rohrbrücke 16 bzw. zwischen den beiden Absperrscheiben 19 der Absperrplatte 15 angeordnet. Sie bilden einen Axial-Anschlag für die maximale axiale Annäherung der Dichtringe 17 bzw. Absperrscheiben 19.

Gleichzeitig dienen sie zur axialen Zentrierung der beiden Dichtringe 17 bzw. Absperrscheiben 19, wenn diese sich in ihrer Schieberplatten-Bewegungsstellung befinden, d. h. in axial maximal angenäherter Position. Die axial gerichteten Einstellschrauben sind zum vorgenannten Zweck in zwischen den beiden Dichtringen bzw. Absperrscheiben angeordnete Metallblöcke 59 eingeschraubt, und zwar in Axialrichtung an den jeweils diametral gegenüberliegenden Seiten. Die Metallblöcke 59 sind jeweils Teil des Rahmens 20 der Schieberplatte 14 bzw. mit dem Schieberplattenrahmen 20 fest verbunden.

Jeder Dichtring 17 sowie jede Absperrscheibe 19 weist radial gerichtete Laschen 60 auf, die in Axialrichtung miteinander fluchten. Zwischen den Laschen 60 der einander zugeordneten Dichtringe bzw. einander zugeordneten Absperrscheiben sind die oben erwähnten Spreizelemente 18 wirksam. Des weiteren sind an den Laschen 60 die radial gerichteten Einstellschrauben 56 angeordnet, und zwar an den den Rechteckseiten des Rahmens 20 zugekehrten Laschen 60. Zu diesem Zweck sind an den entsprechenden Laschen 60 Gewindehülsen 61 angeordnet, insbesondere angeschweißt, in die dann die radial gerichteten Einstellschrauben 56 einschraubbar sind. Die Fixierung der radial gerichteten Einstellschrauben 56 erfolgt in üblicher Weise durch Kontermuttern 62.

### Bezugszeichenliste

- 10: Doppelplattenschieber
- 11: Schiebergehäuse
- 12: Rohrstutzen
- 13: Durchgang
- 14: Schieberplatte
- 15: Absperrplatte
- 16: Rohrbrücke
- 17: Dichtring
- 18: Spreizelement
- 19: Absperrscheibe
- 20: (Rechteck-) Rahmen der Schieberplatte
- 21: Lagerrolle
- 22: Lagerrolle
- 23: Doppelpfeil
- 24: Rohrprofil
- 25: Rollenlagereinheit
- 26: Lagerrollensatz
- 27: Lagerrollensatz
- 28: Längsachse des Rohrprofils 24
- 29: Plattenebene
- 30: (Rechteck-) Hohlprofil
- 31: Lagerrollenpaar
- 32: Lagerrollenpaar
- 33: Lagerbock
- 34: Lagerbock
- 35: Einstellschraube
- 36: Einstellschraube
- 37: Konterschraube
- 38: Konterschraube
- 39: Kontermutter
- 40: Kontermutter
- 41: Abdeckhaube
- 42: Abdeckhaube
- 43: Ringdichtung
- 44: Ringdichtung
- 45: Befestigungsschraube
- 46: Befestigungsschraube
- 47: Kettenradantrieb
- 48: Antriebskette
- 49: (Hydraulik-) Motor
- 50: Kettenrad
- 51: Kettenradgehäuse
- 52: Antriebswelle
- 53: Durchgang
- 54: Ringdichtung
- 55: Einstell- und Befestigungsschraube
- 56: Einstellschraube (radial)
- 57: Einstellschraube (axial)
- 58: Schraubenkopf
- 59: Metallblock
- 60: Lasche
- 61: Gewindehülse
- 62: Kontermutter
- 63: Lagerrolleneinheit

## Patentansprüche

1. Schieber zum Absperren großer Fluidleitungen, insbesondere Doppelplattenschieber, mit einer innerhalb eines Schiebergehäuses (11) quer zur Fluidleitung bewegbaren Schieberplatte (14), die brillenartig ausgebildet ist und eine Absperrplatte (15) einerseits sowie eine Rohrbrücke (16) andererseits umfaßt, wobei in Schließstellung die Absperrplatte (15) und in Offenstellung die Rohrbrücke (16) in die Fluidleitung hineinbewegt ist,
**dadurch gekennzeichnet**, daß
die Schieberplatte (14) innerhalb des Schiebergehäuses (11) rollengelagert ist derart, daß die Lagerrollen (21, 22) die Schieberplatte (14) radial zu ihrer Bewegungsrichtung (23) nach allen Seiten hin halten.

2. Schieber nach Anspruch 1,
dadurch gekennzeichnet, daß die Schieberplatte (14) parallel zur Bewegungsrichtung (23) an zwei gegenüberliegenden Schmalseiten rollengelagert ist.

3. Schieber nach Anspruch 2,
dadurch gekennzeichnet, daß die Schieberplatte (14) an einer sich parallel zur Bewegungsrichtung (23) erstreckenden Schmalseite durch ein Führungsprofil, insbesondere Vieleck-, Rundstab- oder Rohrprofil (24), begrenzt ist, an dem im Schiebergehäuse (11) drehbar angeordnete Lagerrollen (21) abrollbar sind, wobei die Lagerrollen (21) in bezug auf die Profil längsachse (28) etwa sternförmig angeordnet sind.

4. Schieber nach Anspruch 3,
dadurch gekennzeichnet, daß dem Führungsprofil (24) mindestens zwei in Bewegungsrichtung (23) der Schieberplatte (14) voneinander beabstandete Rollenlagereinheiten (25) zugeordnet sind, die jeweils mindestens einen Satz, insbesondere zwei Sätze (26, 27) von sternförmig angeordneten Lagerrollen (21) aufweisen.

5. Schieber nach Anspruch 4,
dadurch gekennzeichnet, daß jeder Lagerrollensatz (26; 27) mindestens drei, insbesondere vier gleichmäßig über den Umfang des Führungsprofils, insbesondere Rohrprofils (24), angeordnete Lagerrollen (21) umfaßt, wobei im letztgenannten Fall die Lagerrollen in zwei sich senkrecht zueinander erstreckende Ebenen liegen, die mit der Schieberplattenebene (29) jeweils einen Winkel von etwa 45° einschließen.

6. Schieber nach einem der Ansprüche 3 bis 5,
dadurch gekennzeichnet, daß die Schieberplatte (14) an der anderen sich parallel zur Bewegungsrichtung (23) erstreckenden Schmalseite durch flachseitig abrollende Lagerrollen (22) gehalten ist.

7. Schieber nach Anspruch 6,
dadurch gekennzeichnet, daß den flachseitig abrollenden Lagerrollen (22) ein Führungssteg, insbesondere in Form eines Rechteck-Hohlprofils (30), zugeordnet ist, an dem die Lagerrollen (22) abrollbar sind.

8. Schieber nach Anspruch 7,
dadurch gekennzeichnet, daß dem Führungssteg, insbesondere in Form eines Rechteck-Hohlprofils (30), wenigstens zwei in Bewegungsrichtung (23) der Schieberplatte (14) voneinander beabstandete Lagerrolleneinheiten (63) mit wenigstens einem, insbesondere zwei Lagerrollenpaaren (31, 32) zugeordnet sind.

9. Schieber nach einem der Ansprüche 3 bis 8,
dadurch gekennzeichnet, daß die Lagerrollen (21; 22) jeweils individuell den zugeordneten Längsführungsflächen von Führungsprofil (24) bzw. Führungssteg (30) zustellbar sind.

10. Schieber nach Anspruch 9,
dadurch gekennzeichnet, daß jedem Lagerrollenbock (33; 34) wenigstens eine, insbesondere wenigstens zwei voneinander beabstandete und am Schiebergehäuse (11) abgestützte Einstellschrauben (35; 36) sowie eine dazwischen angeordnete, am Lagerbock (33; 34) abgestützte Konterschraube (37; 38) zugeordnet sind.

11. Schieber nach Anspruch 10,
dadurch gekennzeichnet, daß die Einstell- (35; 36) und Konterschrauben (37; 38) schiebergehäuse-außenseitig durch eine lösbar befestigte Haube (41; 42) oder dergleichen fluiddicht (Ringdichtungen 43; 44) abgedeckt sind.

12. Schieber nach einem der Ansprüche 1 bis 11, wobei die Schieberplatte (14) durch einen Zahnstangen- oder Kettenradantrieb (47) hin- und herbewegbar ist, wobei bei einem Kettenradantrieb (47) dieser eine an einer sich parallel zur Bewegungsrichtung (23) erstreckenden Schmalseite der Schieberplatte (14) befestigte Kette (48) sowie ein in diese eingreifendes, mit einem Antrieb (49) wirkverbundenes Kettenrad (50) aufweist,
dadurch gekennzeichnet, daß das Kettenrad (50) in einem am Schiebergehäuse (11) fluiddicht anflanschbaren Gehäuse (51) gelagert ist, wobei die mit dem Kettenrad (50) getrieblich verbundene Antriebswelle (52) fluiddicht aus dem Kettenradgehäuse (51) herausgeführt ist.

13. Schieber nach Anspruch 12,
dadurch gekennzeichnet, daß das Kettenradgehäuse und damit das schiebergehäuseseitig aus dem Kettenradgehäuse (51) vorstehende Kettenrad (50) unter Aufrechterhaltung der Fluiddichtigkeit zwischen dem Innenraum des Schiebergehäuses (11) und der Umgebung der an der Schieberplatte (14) befestigten Antriebskette (48) mittels Einstell- und Befestigungsschrauben (55) zustellbar ist.

14. Schieber nach Anspruch 13,
dadurch gekennzeichnet, daß das Schiebergehäuse (11) zum Anflanschen des Kettenradgehäuses (51) einen Durchgang (53) aufweist, in den unter Zwischenschaltung einer Ringdichtung (54), insbesondere in Form eines O-Rings, das Kettenradgehäuse (51) einpaßbar ist, um dann gegenüber dem Schiebergehäuse (11) justiert und mit diesem mittels der Einstell- und Befestigungsschrauben (55) fest verschraubt werden zu können.

15. Schieber nach einem der Ansprüche 1 bis 14, wobei die Rohrbrücke (16) zwei durch einen Kompensator miteinander verbundene Dichtringe (17) aufweist, die in der Offenstellung des Schiebers gegen korrespondierende Dichtsitze des Schiebergehäuses (11) mittels einer Spreizvorrichtung (18) anpreßbar sind, und wobei die Absperrplatte (15) zwei Absperrscheiben (19) umfaßt, die in der Schließstellung des Schiebers ebenfalls mittels einer Spreizvorrichtung (18) gegen die erwähnten Dichtsitze des Schiebergehäuses (11) anpreßbar sind,
dadurch gekennzeichnet, daß
die Dichtringe (17) der Rohrbrücke (16) und/oder die Absperrscheiben (19) der Absperrplatte (15) durch radial sowie axial gerichtete Einstellschrauben (56 bzw. 57) innerhalb eines Rahmens (20) der Schieberplatte (14) gehalten sind.

16. Schieber nach Anspruch 15,
dadurch gekennzeichnet, daß die etwa radial gerichteten Einstellschrauben (56) mit ihrem Schraubenkopf (58) am Rahmen (20) der Schieberplatte (14) gleitlagernd anliegen.

17. Schieber nach Anspruch 15 oder 16,
dadurch gekennzeichnet, daß die axial gerichteten Einstellschrauben (57) zwischen den beiden Dichtringen (17) und/oder Absperrscheiben (19) von Rohrbrücke (16) bzw. Absperrplatte (15) angeordnet sind und einen Anschlag für die maximale axiale Annäherung der Dichtringe (17) bzw. Absperrscheiben (19) bilden.

## Claims

1. Slide for shutting off large fluid lines, especially double-plate slides with a sliding plate (14) which is inside a slide housing (11), and which is movable transversely to the fluid line and which is designed like a spectacle plate and comprising a closing plate (15) on the one side and also a pipe bridge (16) on the other side, the closing plate (15) being moved into the fluid line in the closed position and the pipe bridge 16 into said fluid line in the open position,
characterised in that
the slide plate (14) within the slide housing is positioned on a roller in such a way that the bearing rollers (21,22) hold the sliding plate (14) radially to its direction of movement (23) on all sides.

2. Slide according to Claim 1,
characterised in that
the sliding plate (14) is positioned on a roller parallel to the direction of movement (23) on two opposite-facing narrow sides.

3. Slide according to Claim 2,
characterised in that,
the sliding plate (14) is restricted on one narrow side extending parallel to the direction of movement (23) by a guiding profile, in particular a polygonal, round or tubular profile (24), on which bearing rollers (21) which are arranged rotatably can be rolled, the bearing rollers (21) being arranged roughly radially with respect to the longitudinal profile axis (28).

4. Slide according to Claim 3,
characterised in that
at least two roller bearing units (25), which are at a spacing from one another in the direction of movement (23) of the sliding plate (14), are assigned to the guiding profile (24) and also have at least one set respectively, especially two sets (26,27) of radially arranged bearing rollers (21).

5. Slide according to Claim 4,
characterised in that
each set of bearing rollers (26,27) comprises at least three, especially four bearing rollers (21) which are arranged uniformly across the circumference of the guiding profile, especially of the tubular profile (24), the bearing roller lying, in the last mentioned case, on two levels extending perpendicularly to one another which form an angle of roughly 45° to the plane of the sliding plate (29) respectively.

6. Slide according to one of the Claims 3 to 5,
characterised in that
the sliding plate (14) is held on to the other narrow side extending parallel to the direction of movement (23) by flat-sided rolling bearing rollers (22).

7. Slide according to Claim 6,
characterised in that
a guiding frame, particularly in the form of a square hollow profile (30), on which the bearing rollers (22) can be rolled, are assigned to the flat-sided rolling bearing rollers (22).

8. Slide according to Claim 7,
characterised in that
at least two bearing roller units (63) with at least one, especially two pairs of bearing rollers (31,32) are at a spacing from one another in the direction of movement (23) of the sliding plate (14) and are assigned to the guiding frame especially in the form of a square hollow profile (30).

9. Slide according to one of the Claims 3 to 8,
characterised in that
the bearing rollers (21,22) are advanced individually to the assigned longitudinal guiding surfaces of the guiding profile (24) or guiding frame (30) respectively.

10. Slide according to Claim 9,
characterised in that
at least one, especially at least two adjustable screws (35,36) which are at a spacing from one another and supported on the slide housing 11, as well as a counter screw which is arranged in between and supported on the bearing block (33,34), are assigned to each bearing roller block (33,34).

11. Slide according to Claim 10,
characterised in that
the adjustable (35;36) and counter screws (37;38) are covered on the outside of the slide housing by a detachably secured cap (41;42) or similar sealed ring seals (43,44).

12. Slide according to one of the Claims 1 to 11,
where the sliding plate (14) can be moved back and forth by a cog-wheel or chain-wheel drive (47), where, with a chain-wheel drive (47), the latter has a chain (48) which is attached to a narrow side of the sliding plate (14) extending parallel to the direction of movement (23) and also a chain wheel (50) which engages into the latter and works in conjunction with a drive (49),
characterised in that
the chain wheel (50) is located in a housing (51) which can be flanged in a sealed fashion to the slide housing (11), the drive shaft, which is connected for driving to the chain wheel (50), being directed out of the chain wheel housing (51) in a sealed fashion.

13. Slide according to Claim 12,
characterised in that
the chain wheel housing and hence the chain wheel (50), protruding out of the chain wheel housing on the slide housing side, is advanced, while keeping the fluid contained, between the interior space of the slide housing (11) and the surroundings of the driving chain (48) which is secured to the sliding plate (14) by means of adjustable and fastening screws (55).

14. Slide according to Claim 13,
characterised in that
the slide housing (11) has a passage (53) to the flange of the chain wheel housing (51), into which passage the chain wheel housing (51) can be fitted by connecting a ring seal (54), especially in the form of an O-ring, so that it can be adjusted relative to the sliding housing (11) and screwed down tightly to the latter using adjustable and fastening screws (55).

15. Slide according to one of the claims 1 to 14,
where the pipe bridge (16) has two sealing rings (17) which are connected to one another by a compensator, and which can be pressed on by means of an expansion device (18) in the open position of the slide against corresponding sealing seats of the slide housing (11), and where the shutting-off plate (15) comprises two shutting-off discs (19) which can be likewise be pressed on in the closed position of the slide using an expansion device (18) against the already mentioned sealing seats of the slide housing (11),
characterised in that
the sealing rings (17) of the pipe bridge (16) and/or the shutting-off discs (19) of the shutting-off plate (15) are held by radially and axially directed adjustable screws (56 or 57) within a frame (20) of the slider plate (14).

16. Slide according to Claim 15,
characterised in that
the adjustable screws (56) which are directed approximately radially adjoin, by sliding, the frame (20) of the sliding plate with their screw heads(58).

17. Slide according to Claim 15 or 16,
characterised in that
the axially directed adjustable screws (57) are arranged between both sealing rings (17) and/or shutting-off discs (19) of the pipe bridge (16) or the shutting-off plate (15) and form a buffer for bringing the sealing rings (17) as near to one another as possible axially.

## Revendications

1. Robinet-vanne pour grosses conduites de fluides, en particulier robinet-vanne à double opercule, comportant une vanne (14) du type lunette qui est mobile à l'intérieur du corps (11) du robinet perpendiculairement à la conduite de fluide et comprend d'une part un obturateur (15) et d'autre part un pont tubulaire (16), en position fermée, l'obturateur (15), et en position ouverte, le pont tubulaire (16), étant engagé dans la conduite de fluide, caractérisé par le fait que la vanne (14) est appuyée sur des galets à l'intérieur du corps (11) de façon telle que les galets (21, 22) la tiennent radialement par rapport à sa direction de mouvement (23) de tous les côtés.

2. Robinet-vanne selon la revendication 1, caractérisé par le fait que la vanne (14) est appuyée sur des galets parallèlement à la direction de mouvement (23) sur deux petits côtés opposés.

3. Robinet-vanne selon la revendication 2, caractérisé par le fait que la vanne (14) est limitée sur un petit côté s'étendant parallèlement à la direction de mouvement (23) par un profilé de guidage, en particulier un profilé polygonal, rond plein ou tubulaire (24), sur lequel peuvent rouler des galets (21) montés tournants dans le corps (11) du robinet, ces galets (21) étant disposés à peu près en étoile par rapport à l'axe longitudinal (28) du profilé.

4. Robinet-vanne selon la revendication 3, caractérisé par le fait qu'au profilé de guidage (24) sont associés au moins deux ensembles d'appui à galets (25) espacés dans la direction de mouvement (23) de la vanne (14) qui présentent chacun au moins un groupe, en particulier deux groupes (26, 27), de galets (21) disposés en étoile.

5. Robinet-vanne selon la revendication 4, caractérisé par le fait que chaque groupe de galets (26, 27) présente au moins trois, en particulier quatre, galets (21) disposés régulièrement sur la circonférence du profilé de guidage, en particulier du profilé tubulaire (24), les galets, dans le second cas, étant situés dans deux plans perpendiculaires qui font chacun un angle d'environ 45° avec le plan (29) de la vanne.

6. Robinet-vanne selon l'une des revendications 3 à 5, caractérisé par le fait que la vanne (14) est tenue sur l'autre petit côté parallèle à la direction de mouvement (23) par des galets roulant du côté plat (22).

7. Robinet-vanne selon la revendication 6, caractérisé par le fait qu'aux galets roulant du côté plat (22) est associée une nervure de guidage, en particulier formée d'un profilé creux rectangulaire (30), sur laquelle les galets (22) peuvent rouler.

8. Robinet-vanne selon la revendication 7, caractérisé par le fait qu'à la nervure de guidage, en particulier formée d'un profilé creux rectangulaire (30), sont associés au moins deux ensembles de galets (63) espacés dans la direction de mouvement (23) de la vanne (14) et comprenant au moins une, en particulier deux, paires de galets (31, 32).

9. Robinet-vanne selon l'une des revendications 3 à 8, caractérisé par le fait que les galets (21; 22) peuvent être approchés individuellement des surfaces de guidage longitudinales associées du profilé de guidage (24) et de la nervure de guidage (30).

10. Robinet-vanne selon la revendication 9, caractérisé par le fait qu'à chaque support de galet (33 ; 34) sont associées au moins une vis de réglage, en particulier au moins deux vis de réglage (35 ; 36) espacées et appuyées sur le corps (11) du robinet et une contre-vis (37 ; 38) placée entre les précédentes et appuyée sur le support (33 ; 34).

11. Robinet-vanne selon la revendication 10, caractérisé par le fait que les vis de réglage (35 ; 36) et les contre-vis (37 ; 38) sont couvertes sur le côté extérieur du corps du robinet, de manière étanche aux fluides (joints annulaires 43 ; 44), par un capuchon fixé de manière amovible (41 ; 42) ou un élément semblable.

12. Robinet-vanne selon l'une des revendications 1 à 11, dans lequel un dispositif moteur à crémaillère ou à roue à chaîne (47) peut faire aller et venir la vanne (14), le dispositif moteur à roue à chaîne (47) présentant une chaîne (48) fixée à un petit côté de la vanne (14) s'étendant parallèlement à la direction de mouvement (23) et une roue (50) s'engageant dans cette chaîne et entraînée par un organe moteur (49), caractérisé par le fait que la roue à chaîne (50) est montée dans une boîte (51) pouvant être bridée de manière étanche aux fluides au corps (11) du robinet, l'arbre moteur (52) qui entraîne la roue à chaîne (50) sortant de manière étanche aux fluides de la boîte à roue à chaîne (51).

13. Robinet-vanne selon la revendication 12, caractérisé par le fait que la boîte à roue à chaîne (51) et avec elle la roue à chaîne (50) qui en fait saillie du côté du corps du robinet peuvent être approchées de la chaîne motrice (48), fixée à la vanne (14), au moyen de vis de réglage et de fixation (55) avec maintien de l'étanchéité aux fluides entre l'intérieur du corps (11) du robinet et le milieu environnant.

14. Robinet-vanne selon la revendication 13, caractérisé par le fait que son corps (11) présente pour le bridage de la boîte à roue à chaîne (51) un passage (53) dans lequel on peut faire entrer celle-ci avec intercalation d'un joint annulaire (54), en particulier d'un joint torique, pour pouvoir ensuite l'ajuster par rapport au corps (11) et la fixer à celui-ci au moyen des vis de réglage et de fixation (55).

15. Robinet-vanne selon l'une des revendications 1 à 14, dans lequel le pont tubulaire (16) présente deux joints annulaires (17) reliés par un compensateur qui peuvent, lorsque le robinet est ouvert, être serrés contre des sièges correspondants du corps (11) au moyen d'un dispositif d'écartement (18), et l'obturateur (15) comprend deux disques (19) qui peuvent, lorsque le robinet est fermé, être serrés également au moyen d'un dispositif d'écartement (18) contre les sièges précités du corps (11), caractérisé par le fait que les joints annulaires (17) du pont tubulaire (16) et/ou les disques (19) de l'obturateur (15) sont tenus à l'intérieur d'un cadre (20) de la vanne (14) par des vis de réglage dirigées radialement (56) et des vis de réglage dirigées axialement (57).

16. Robinet-vanne selon la revendication 15, caractérisé par le fait que les vis de réglage dirigées à peu près radialement (56) sont en appui glissant par leur tête (58) sur le cadre (20) de la vanne (14).

17. Robinet-vanne selon l'une des revendications 15 et 16, caractérisé par le fait que les vis de réglage dirigées axialement (57) sont placées entre les deux joints annulaires (17) du pont tubulaire (16) et/ou les deux disques (19) de l'obturateur (15) et forment une butée pour le rapprochement axial maximal des joints annulaires (17) ou des disques (19).
